# FASCICULE DE BREVET EUROPEEN

(11) **EP 3 478 444 B1**
(45) Date de publication et mention de la délivrance du brevet: **12.08.2020**
(21) Numéro de dépôt: 17734305.0
(22) Date de dépôt: 30.06.2017
(51) Int. Cl.: B23K 26/08, B23K 26/38, B23K 26/70, B23K 101/16, B23K 101/18

(54) **MACHINE DE DECOUPE LASER POUR LE TRAVAIL DE MATIERE SE PRESENTANT EN FEUILLE ET/OU EN BOBINE**
LASERSCHNEIDEMASCHINE ZUR BEARBEITUNG VON MATERIAL IN BLATT- UND/ODER ROLLENFORM
LASER CUTTING MACHINE FOR THE WORKING OF MATERIAL PRESENTED IN SHEET AND/OR REEL FORM

(30) Priorité: 30.06.2016 LU 93134
(43) Date de publication de la demande: 08.05.2019
(73) Titulaire: Interver Management S.A., 8362 Grass (LU)
(72) Inventeur: VANDEVELDE, Pierre, 6041 Gosselies (BE)
(74) Mandataire: Office Freylinger
(86) Numéro de dépôt international: PCT/EP2017/066242
(87) Numéro de publication internationale: WO 2018/002289

(56) Documents cités:
- EP-A1- 2 818 271
- DE-A1- 10 245 371
- DE-A1-102014 114 367

## Description

### Domaine technique

La présente invention concerne une machine de découpe laser conformément au préambule de la revendication 1 (voir par exemple EP 2 818 271 A1), pour le travail de matière en feuille et bobine.

### Etat de la technique

Dans les systèmes de découpe laser, il existe globalement deux configurations de machine : les portiques de découpe laser et les lignes de découpe laser à partir de bobines de matière.

Avant de décrire plus en détails ces deux systèmes, il est important de fixer la terminologie.

Dans ces systèmes de découpe, les axes X et Y sont communément à la perpendiculaire l'un de l'autre. L'utilisation d'une tête de découpe laser implique un axe supplémentaire afin de régler une distance constante entre la sortie du faisceau laser et la surface de la tôle (le plan défini par les axes X et Y), cet axe supplémentaire est généralement dénommé Z. Dans certains cas, la tête de découpe en plus de l'axe Z peut être équipée d'axes supplémentaires que l'on nommera Xbis Ybis, qui sont utilisés avec une course très faible pour la réalisation de découpe très petites tels que des trous, ce qui évite d'utiliser les axes X et Y sur de très courtes distances et augmente la précision et la vitesse de coupe.

Il reste à noter que la tête de découpe laser peut être également utilisée pour effectuer du marquage, de la gravure ou toute autre opération compatible avec la configuration cinématique générale de la machine.

Ces machines ne sont pas seulement utilisées sur des matières métalliques mais également sur d'autres matières. Il est à noter que la présente demande de brevet est plus particulièrement destinée au travail de la tôle en faible épaisseur (de quelques dixièmes d'épaisseur jusque 2 à 3 mm maximum). Typiquement mais pas exclusivement, le concept décrit est particulièrement adéquat pour la découpe de tôle et la réalisation de pièces de forme utilisées dans le domaine du traitement de l'air, ventilation, HVAC, calorifugeage.
A) Portique de découpe - ou communément appelé table X Y : Dans une telle configuration, la matière à découper (dénommée flanc) est déposée sur une table soit manuellement, soit par un robot. Cette table peut être fixe ou mobile pour faciliter les opérations de chargement et déchargement de la matière. La matière est immobilisée pendant l'opération de découpe et la tête laser se déplace suivant un parcours X et Y et effectue la découpe dans un ordre permettant de limiter les déplacements tout en optimisant les chutes potentielles. Les dimensions les plus courantes des flancs sont 1500 x 3000 mm, pouvant même aller jusque 2000 x 4000 mm.
   Les avantages de tels portiques sont nombreux : la matière est immobilisée sur la table et de par la rigidité du portique, la tête de découpe laser peut dès lors se déplacer à des vitesses très élevées. Ces portiques de découpe sont particulièrement destinés à la découpe de matière plus épaisse (par exemple acier jusque 20 mm) et, dans une moindre mesure, de la matière très fine. L'avantage le plus important sur le portique X,Y est que la tôle peut être découpée et est accessible sur la totalité de la surface. Par contre, après l'opération de coupe, le déchet qui se présente sous la forme d'un squelette doit rester facilement extractible, et doit donc offrir une certaine rigidité, ce qui a pour conséquence une perte de matière plus importante.
   Comme inconvénients des portiques de découpe, on peut citer notamment le coût élevé, surtout en relation avec la cinématique requise pour le déplacement de la tête de découpe sur une surface importante. La surface occupée au sol est également importante.
   - Par ailleurs, comme la matière est achetée sous forme de flancs prédécoupés à dimensions standards, la découpe est limitée au format de la tôle, ce qui résulte souvent dans une utilisation non rationnelle de la matière. En effet, des chutes de matière sont inévitables, puisque le format est fixe et résulte des flancs achetés à dimensions standards dans le commerce.
   - La matière achetée en flancs prédécoupés est proportionnellement plus chère que la matière en bobine.
   - Le cycle de décharge (= récupération des pièces découpées) ne peut être réalisé que lorsque le cycle complet de découpe est terminé. Pour les tables de grandes dimensions, cela peut être fastidieux, surtout s'il faut récupérer de petites pièces du centre de la table. De manière générale, le cycle de décharge constitue une perte de temps importante dans le cycle d'utilisation de la machine, le squelette (= chute de tôle) doit aussi être évacué généralement manuellement. Il est à noter que le squelette doit être le plus grand possible afin de faciliter sa manipulation, mais ces squelettes nécessitent un empilage / stockage / évacuation. Toutes ces opérations nécessitent de l'espace de stockage et du temps.

   B) Ligne de découpe laser à partir d'une bobine de matière
   - Cette technologie est plus récente (une dizaine d'années) et la configuration la plus commune est une tête de découpe laser qui se déplace sur un axe Y, perpendiculaire à un axe X, direction dans laquelle se déplace la tôle qui est « pincée » entre deux paires de rouleaux (une paire de chaque côté de la tête de découpe). La rotation de ces rouleaux pinceurs en sens horlogique ou non horlogique se traduit par un déplacement de la tôle en X. Les mouvements combinés en X et Y, associés à la tête de découpe, résultent donc en la découpe de pièces de forme. Un axe Z peut également être associé pour permettre un réglage constant de la distance entre la tôle à découper et la tête de découpe laser. Comme pour le portique de découpe, des axes Xbis et Ybis peuvent également être présents.

Un avantage de ces systèmes est que la matière en bobines est plus économique à l'achat que la matière achetée sous forme de flancs. De plus une imbrication des pièces (= nesting) suivant l'axe X, correspondant à la longueur de la matière, permet de réduire substantiellement les chutes par rapport à la configuration du portique de découpe.

Un inconvénient de ces lignes de découpe à partir de bobines est leur encombrement au sol. En effet, la configuration d'une telle installation est comme suit : dévidoir - boucle 1 - redresseur - boucle 2 - machine de découpe - table d'évacuation statique (table de réception).

Le changement d'une bobine à une autre est compliqué et nécessite de rebobiner complètement la partie déjà déroulée, donc dans le sens : machine de découpe > boucle 2 > redresseur > boucle 1 > dévidoir.
- Lors de la découpe, la tôle, comme mentionné, est pincée entre deux paires de rouleaux et réalise donc des mouvements de va et vient suivant l'axe X, ce qui implique le déplacement de la tôle partiellement découpée, les pièces restent donc suspendues dans le « vide » ou sur une table extérieure. Plus les pièces sont de grandes dimensions (sens du X), plus il existe des risques de déviation et pliage accidentel des éléments. Avec ce système, la tôle doit également rester pincée entre les deux paires de rouleaux pour permettre son guidage et son entraînement. En d'autres termes, une chute de matière (matière non utilisée) sera nécessaire au début et à la fin pour permettre l'entraînement et le guidage de la tôle.
- Les pièces de petites dimensions posent également problème, étant difficiles à évacuer en sortie et ne l'étant souvent seulement qu'à la fin du cycle de découpe.
- Ce type de machine ne permet évidemment pas de travailler la matière à partir de flancs prédécoupés. Cela peut évidemment représenter un inconvénient car l'utilisateur sera obligé d'acheter la matière en bobines, qui bien que moins chère que les flancs prédécoupés, reste handicapante d'ans le cas d'une petite quantité à produire. Aussi, il est important d'attirer l'attention sur les chutes qui doivent être évacuées comme pièces et récupérées, triées, ou sous forme de squelette qui doit être traité comme dans le cas du portique de découpe.

### Objet de l'invention

La présente invention a pour but de remédier aux problèmes ci-dessus et vise en particulier à proposer une machine de découpe pouvant fonctionner en mode portique, c.-à-d. en utilisant des flancs de matière prédécoupés et en mode fonctionnement en ligne utilisant la matière sous forme de bobines.

### Description générale de l'invention

Avec ces objectifs en vue, l'invention a pour objet une machine de découpe laser telle que définie dans la revendication 1, comprenant :
- Un axe X1 muni de pinces permettant de maintenir fermement une matière à découper (= le flanc) en feuilles ou en bobines, permettant de déplacer la matière de la gauche vers la droite.
- Un axe Y : perpendiculairement à l'axe X1, permettant le déplacement d'une tête de découpe laser.
- Un axe X2 muni d'au moins une paire de rouleaux pinceurs permettant de déplacer la matière vers la gauche ou vers la droite.
- Un système de redressage / décambrage / planage accolé à cet axe X2 comprenant un nombre de rouleaux de rouleaux de redressage / décambrage / planage.
- Un bloc reprenant l'axe X2 et le système de redressage déplaçable vers le haut ou vers le bas.
- Une table d'évacuation motorisée permettant d'évacuer les éléments découpés (chutes et bonnes pièces) en un point précis.

Dans un mode de réalisation préférée, le bloc reprenant X2 et le système de redressage / décambrage / planage est muni en sa partie supérieure d'une matière compatible limitant le frottement sur la matière à découper. Cette matière limitant le frottement sur la matière à découper comprend de préférence des brosses.

Le bloc reprenant l'axe X2 et le système de redressage / décambrage / planage peut comprendre une position de garage ou de repos, dans laquelle une face supérieure du bloc est alignée sur la ligne de passe de la machine.

Le bloc reprenant l'axe X2 et le système de redressage / décambrage / planage peut également comprendre une position de travail (position haute) dans laquelle le bloc est positionné de telle façon que l'axe X2 est au même niveau que la ligne de passe.

La feuille peut être déposée manuellement ou à partir d'un système automatique, p.ex. un robot ou un portique de chargement / déchargement. L'origine de ce flanc peut être extérieure à la machine, ou ce flanc peut être généré p.ex. découpé à dimension par la machine même à partir d'une bobine. Au final l'axe X1 permet de déplacer la matière suivant son axe vers la gauche ou vers la droite.

Un axe Z et des axes Xbis et Ybis peuvent être également d'application.

.X1 et X2 peuvent déplacer la matière dans le même axe vers la gauche ou vers la droite.

La position haute peut correspondre à une position de mode déroulage de la tôle à partir de la bobine. Dans cette position, les rouleaux de l'axe X2 sont coïncidents mais n'interfèrent pas avec les pinces de l'axe X1. La tôle peut être déroulée et les pinces peuvent être positionnées de telle façon que la prise de matière est possible avec un minimum de pincement.

La position basse peut correspondre à une position de garage pour l'axe X2 et à une position de travail pour la face supérieur du bloc (X2 + décambrage). Cette face supérieure est au niveau de la ligne de passe de la machine.

Le point précis où sont évacués les éléments découpés (chutes et bonnes pièces) est dénommé zone de picking. L'évacuation peut être réalisée par une personne en mode manuel ou par un robot ou un portique de chargement / déchargement.

Alternativement et / ou en complément à la table d'évacuation motorisée, un bac de récupération, qui peut être un simple bac ou un convoyeur motorisé évacuant les pièces hors de la machine, peut être installé en dessous de la tête de découpe laser. Les pièces ou chutes tombant auront donc des dimensions se rapportant à la largeur de ce convoyeur / bac, soit de l'ordre de 100 à 300 mm. La fonction primaire est d'évacuer les chutes de matières qui sont extraites de forme interne à la tôle découpée et qui ne peuvent donc pas être évacuées par la table d'évacuation motorisée. Il est à noter que cette méthode de fonctionnement pourrait être également appliquée pour l'évacuation de pièces de petites dimensions, le tri de ces pièces se faisant alors à l'extérieur de la machine.

### Description d'une exécution préférée

D'autres particularités et caractéristiques de l'invention ressortiront de la description détaillée d'un mode de réalisation avantageux de la machine.

En effet, cette configuration de machine combine les modes distincts de fonctionnement du portique de découpe (A) et la ligne de découpe à partir de bobines (B), c'est-à-dire que la machine permet le travail de la matière à partir de flancs à plat mais également à partir de bobines.

La configuration de la machine proposée permet une évacuation des pièces découpées et déchets en flux continu, l'évacuation des pièces étant localisée en un point précis par l'intermédiaire d'une table d'évacuation motorisée / et ou un bac de récupération et convoyeur motorisé.

L'évacuation des pièces peut être automatisée facilement avec un robot manipulateur. Alternativement, un opérateur peut récupérer la pièce manuellement et faire une opération de formage tel que le roulage pour la réalisation de virole, ou moulurage, etc. Le flux de matière découpée est continu, il n'est pas nécessaire d'attendre que l'entièreté de la tôle soit découpée (comme pour le portique de découpe).

La machine fonctionne donc en flux continu mais elle prend moins de place que la configuration B et la distance bobine - redresseur est raccourcie ; une seule boucle de contrôle est donc nécessaire.

Dans une configuration préférée, la machine comprend :
- Un axe X1 muni de pinces permettant de maintenir fermement le flanc. Le déplacement de l'axe X1 vers la gauche ou la droite induit donc un mouvement similaire de la matière à découper
- Un axe Y : perpendiculairement à l'axe X1. L'axe Y reprend le déplacement de la tête de découpe laser (axe Z et Xbis et Ybis optionnels).
- Un axe X2 muni d'une paire de rouleaux pinceurs. Le sens de rotation (horlogique ou non horlogique) induit un mouvement de la tôle vers la gauche ou vers la droite. A cet axe X2 est accolé un système de redressage / décambrage / planage qui comprend un nombre de rouleaux proportionnel au type et à l'épaisseur de matière à redresser. De manière générale, plus la matière est épaisse ou non plastique, plus le nombre de rouleaux redresseurs sera élevé. Le positionnement de ces rouleaux peut se faire manuellement ou de manière motorisée.
- Un bloc reprenant X2 et le système de redressage. Ce bloc se déplace vers le haut ou vers le bas et est muni en sa partie supérieure d'une matière compatible limitant le frottement sur la matière à découper (cela peut être typiquement des brosses, mais pas exclusivement). En position basse (= positon garage ou de repos), la face supérieure est alignée sur la ligne de passe de la machine. En position haute, le bloc est positionné de telle façon que l'axe X2 est au même niveau que la ligne de passe. C'est dans cette position haute que le déroulement de la tôle via X2 peut avoir lieu.
- Une table d'évacuation motorisée. Le sens de défilement est perpendiculaire à l'axe X1, mais pas nécessairement. En effet le sens de défilement pourrait être parallèle à l'axe X1. L'objectif de cette table motorisée, en combinaison avec des cycles de fonctionnement spécifiques, est d'évacuer les éléments découpés (chutes et bonnes pièces) en un point précis.

La machine peut opérer en deux cycles de fonctionnement distincts.

En feuille à feuille: l'opérateur dépose le flanc et le positionne dans les pinces. La combinaison des mouvements des axes X1 et Y associée à la tête de coupe permet la découpe. Le fonctionnement en combinaison avec la table motorisée / bac convoyeur d'évacuation permet l'évacuation des pièces découpées et chutes.

A cette fin, les coupes ont toujours lieu avec le déplacement de X1 de la droite vers la gauche, chaque élément découpé tombant naturellement sur la table. Une fois la longueur complète de la tôle découpée, celle-ci effectue un déplacement à vide de la gauche vers la droite Une fois le déplacement réalisé, la tête de découpe laser se positionne et l'opération de découpe a lieu en déplaçant l'axe X1 de la droite vers la gauche, etc. Il est évident que la machine pourrait tout aussi bien être configurée avec un sens de défilement de la matière de la gauche vers la droite,

A partir de bobines : le bloc comprenant X2 et le redresseur se positionne en hauteur afin que l'axe X2 soit à la hauteur de passe de la machine. X2 et déroule alors la bobine sur une longueur optimisée en fonction des pièces à produire.

Une fois la longueur souhaitée atteinte, les pinces sont actionnées pour maintenir la tôle, la tête laser découpe la tôle. Dès ce moment, le morceau non utilisé recule via X2 jusqu'à une position qui permet de descendre le bloc X2 et le redressage / décambrage / planage en position basse.

De fait, la tôle qui se trouve prise dans les pinces sur l'axe X2 peut subir un cycle de découpe suivant le mode feuille à feuille décrit ci-dessus, celle-ci se trouvant au niveau de la ligne de passe.

La machine permet un véritable mode de fonctionnement en feuille à feuille et à partir de bobines, ce qui est unique.

La combinaison de la table d'évacuation / bac et convoyeur d'évacuation et des cycles de découpe permet une évacuation efficace des pièces découpées en flux continu, ce qui n'est pas le cas avec les configurations A et B.

### Brève description des dessins

D'autres particularités et caractéristiques de l'invention ressortiront des dessins annexés dans lesquels :

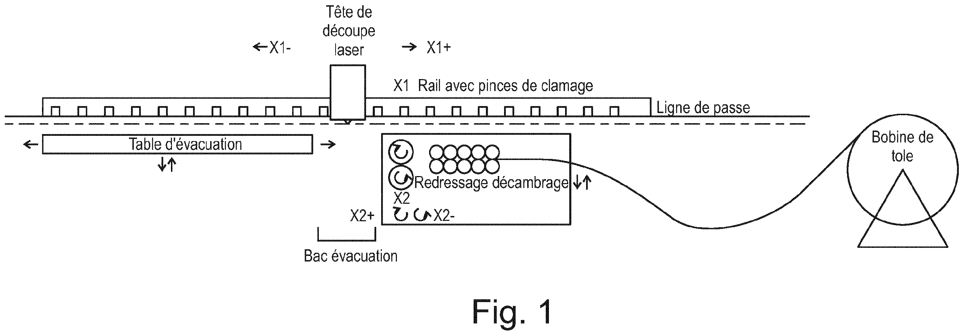

La Fig. 1 montre un schéma d'implantation d'un mode de réalisation préféré en mode découpe d'un flanc (le bloc X2 / redressage / décambrage / planage) étant en position basse (=repos = garage).

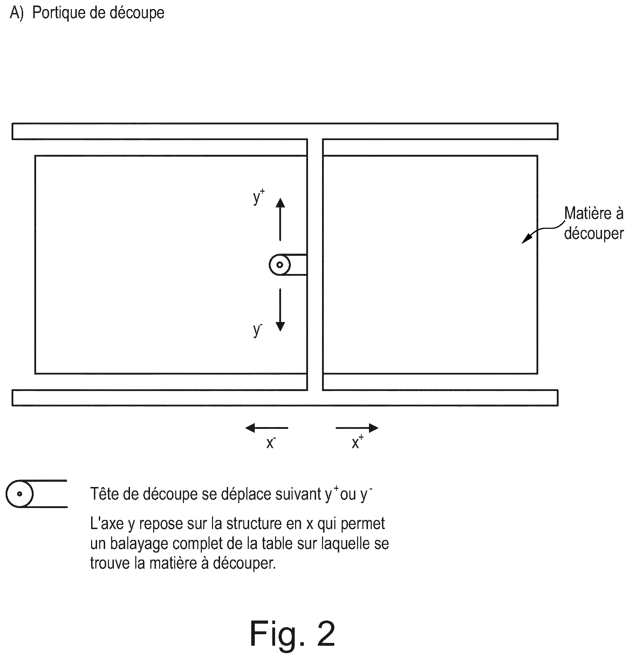

La Fig. 2 montre une vue schématique d'un portique de découpe X,Y.

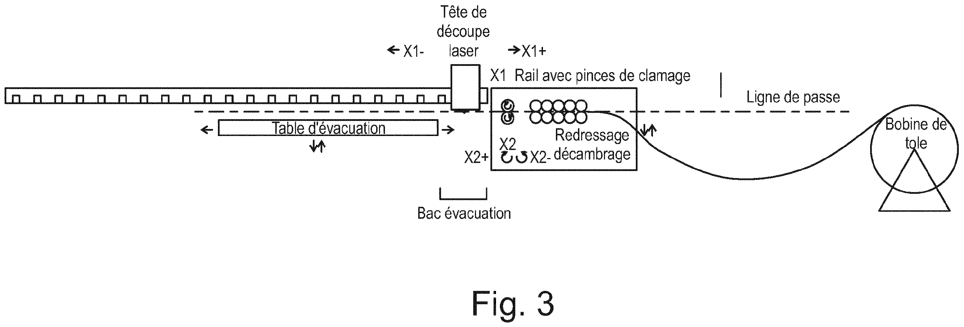

La Fig. 3 montre un schéma d'implantation d'un mode de réalisation préféré en mode découpe à partir d'une bobine (le bloc X2 / redressage / décambrage / planage) étant en position haute.

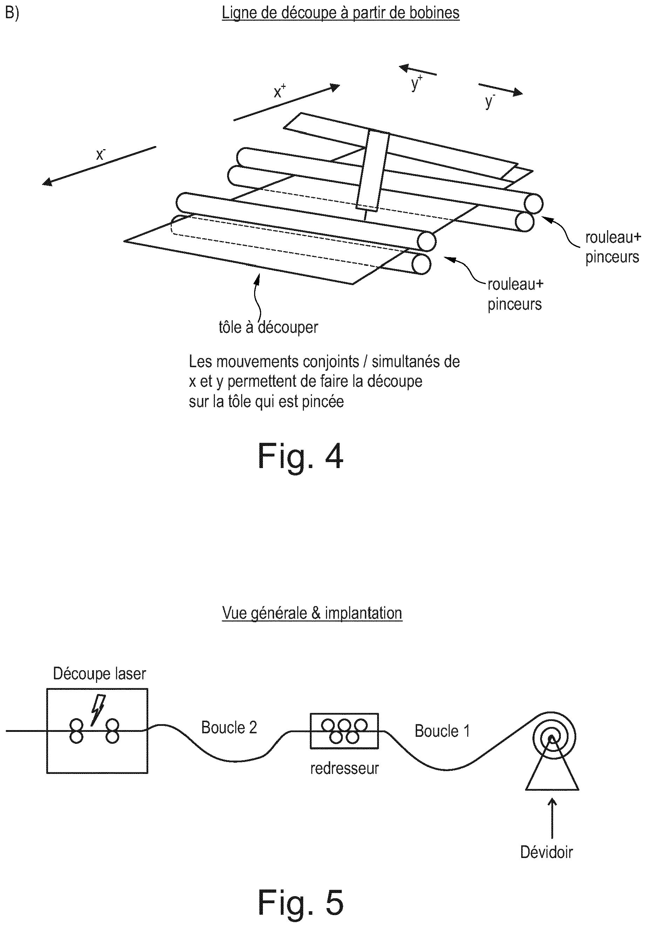

La Fig. 4 est une vue d'ensemble schématique d'une machine pratiquant la découpe uniquement à partir de bobines. La Fig. 5 montre un schéma d'implantation d'un mode de réalisation préféré en mode découpe à partir d'une bobine tel que pratiqué sur une ligne (Fig. 4). Les deux boucles (1 et 2) sont représentées.

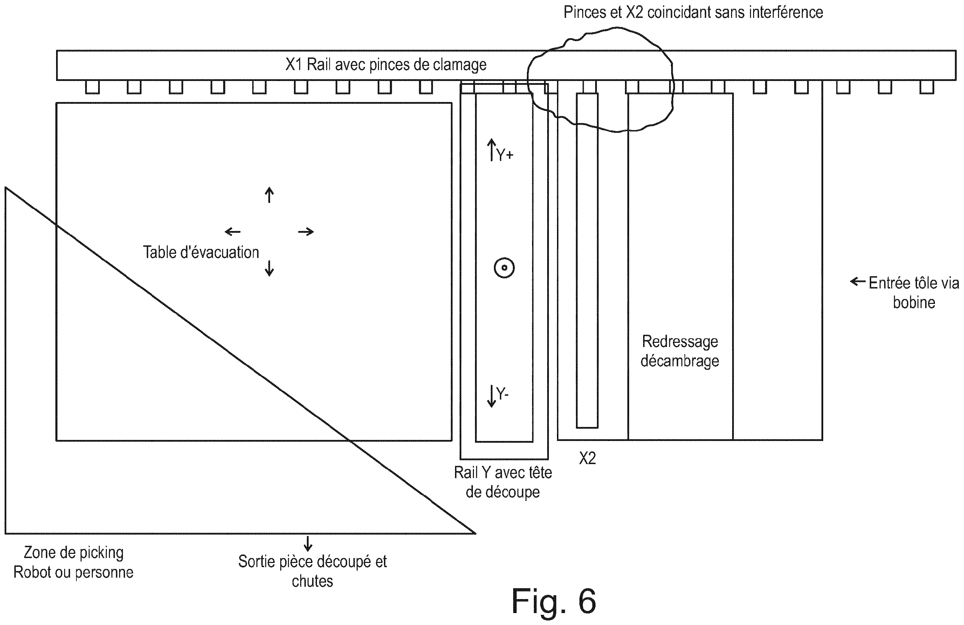

La Fig. 6 est une vue schématique du dessus montrant l'agencement des différents éléments d'une machine pour la découpe à partir de bobines et à partir de flancs à plats. Il est important d'insister sur la cohabitation des deux modes de fonctionnement distincts (à partir de flancs à plat) et à partir de bobines, les pinces telles que renseignées sont coïncidentes dans les deux cas mais n'interfèrent pas, en résumé leur constitution mécanique et position permettent les deux modes de fonctionnement.

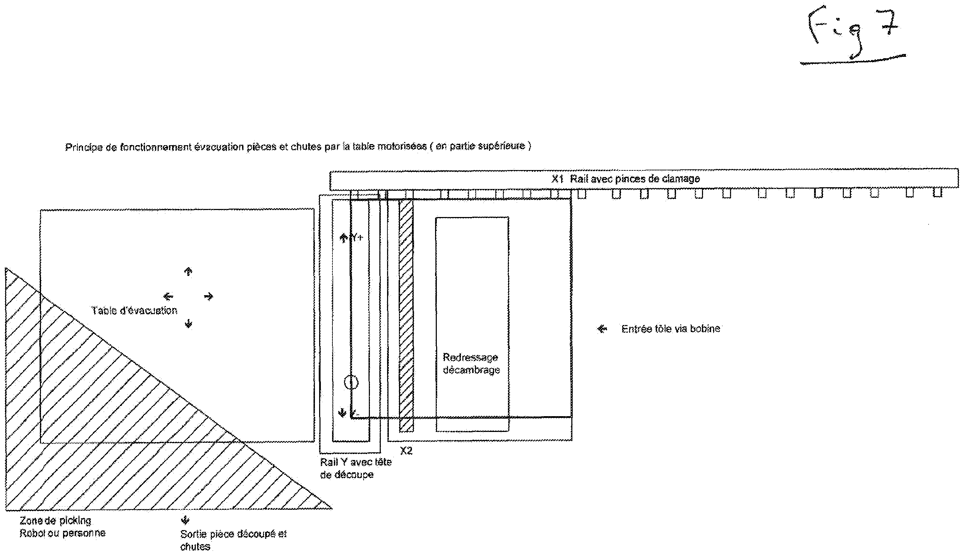

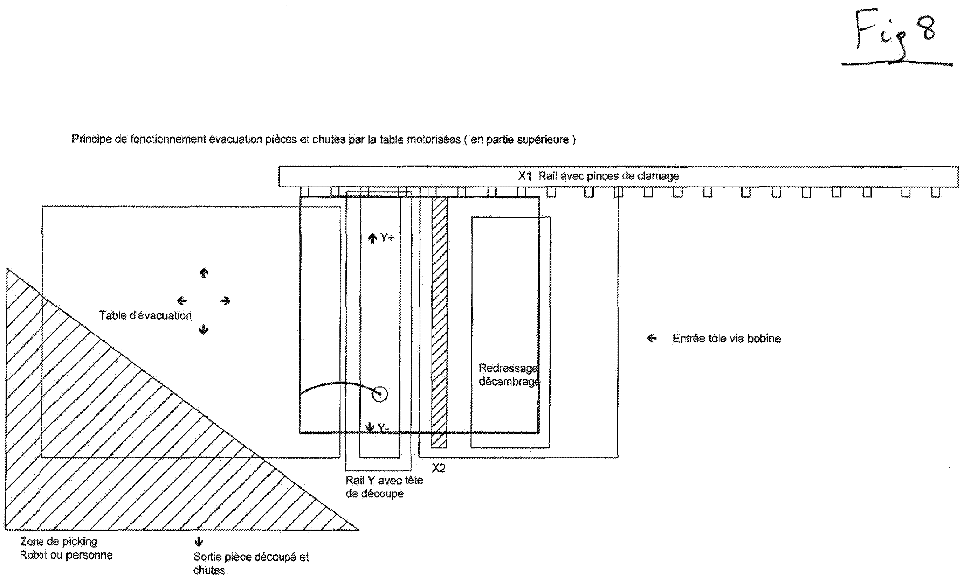

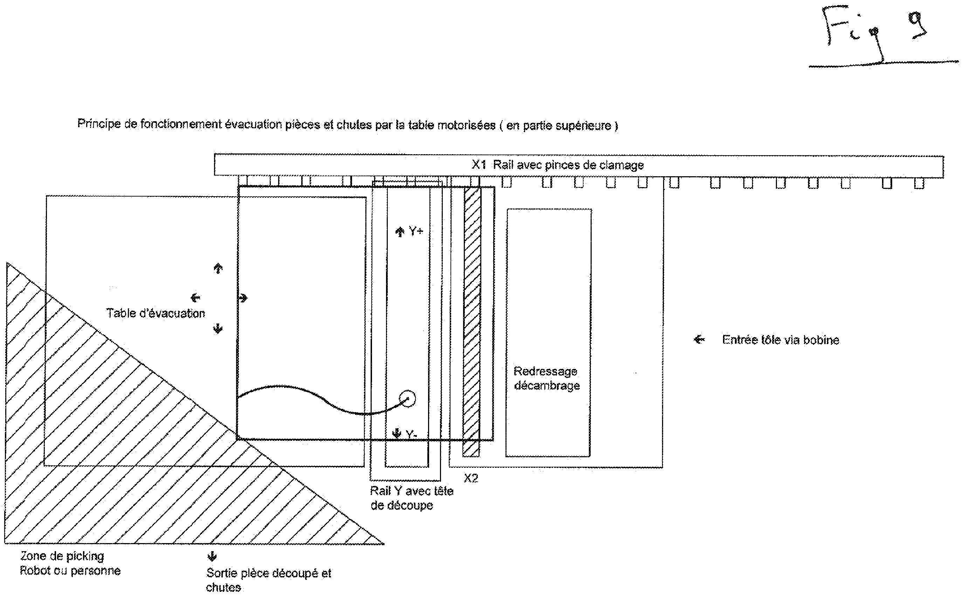

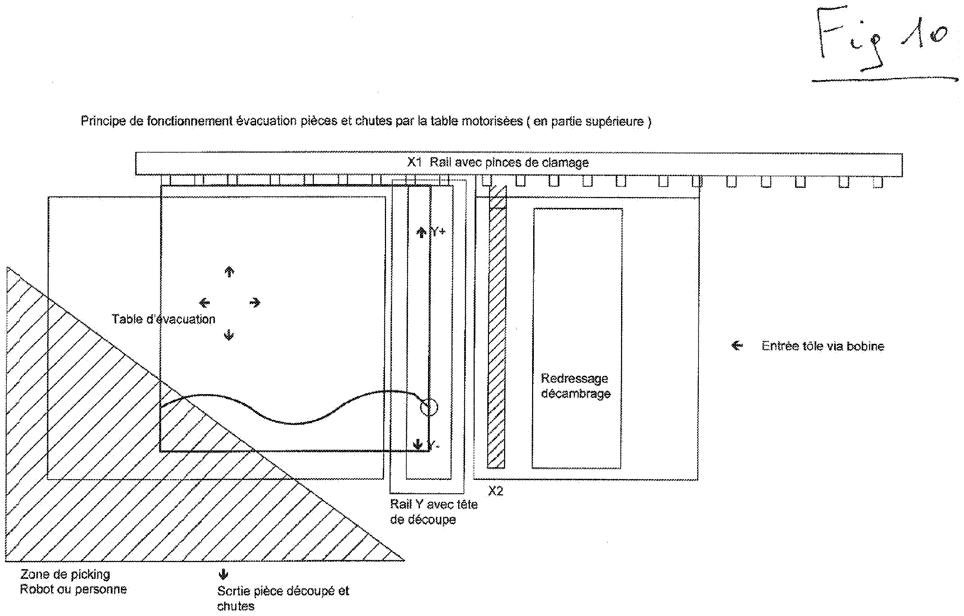

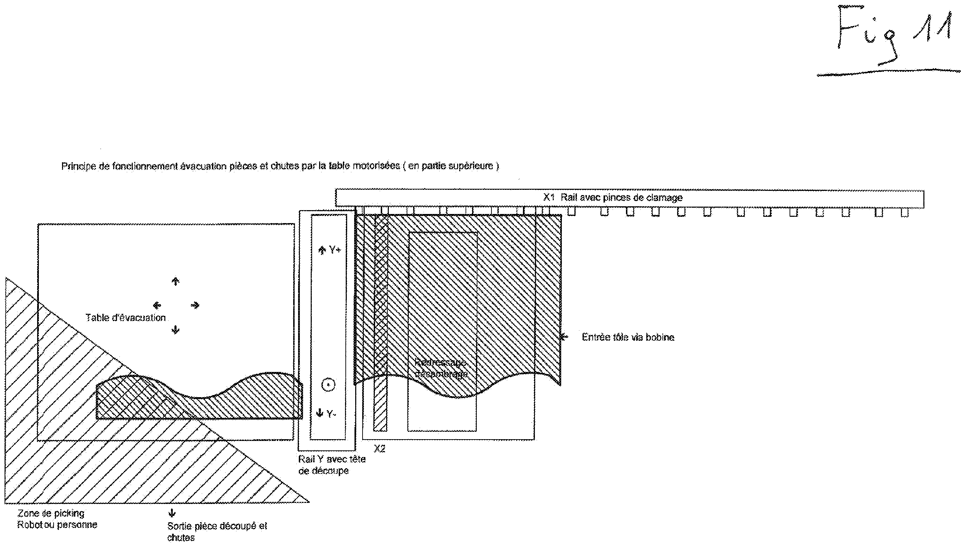

Les Fig. 7 à 11 illustrent la découpe d'une pièce de forme à partir d'un flanc, le flanc est localisé à droite de la tête de découpe, l'évacuation de la pièce peut se faire favorablement par la table motorisée d'évacuation qui se trouve à gauche de la tête de découpe laser. Progressivement, l'axe X1 va se déplacer vers la gauche et l'axe Y va se déplacer également; la conjonction de ces deux axes va déterminer le parcours de coupe qui apparait entre la Fig. 8 à 10, pour finalement à la Fig. 11 procéder à l'évacuation de la pièce par le mouvement de la table motorisée refoulant la pièce en dehors de la machine vers la zone de picking.
   Le cycle peut continuer, l'axe X1 déplace la tôle restante (représentée en hachuré et positionnée à droite), la prochaine coupe peut commencer...

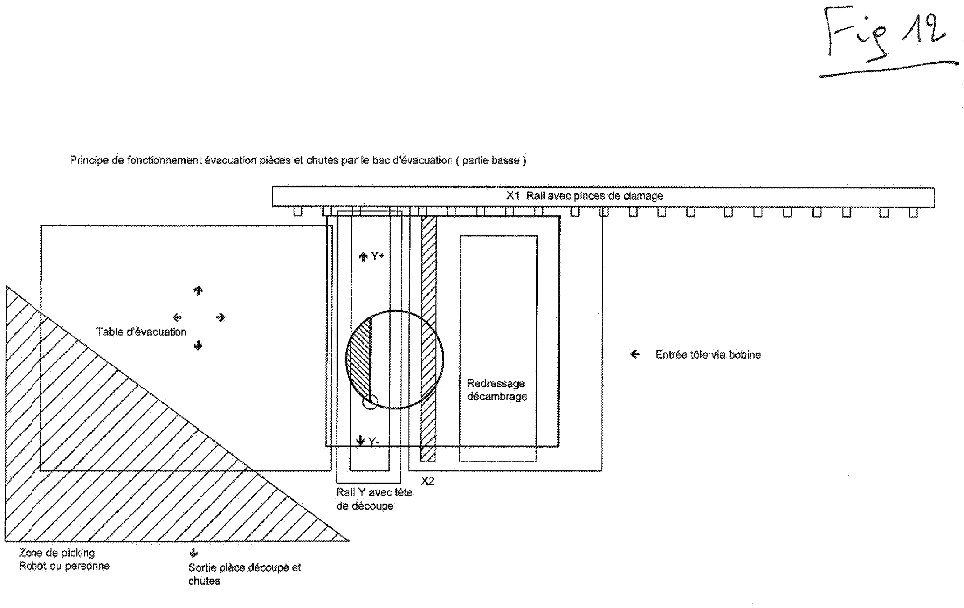

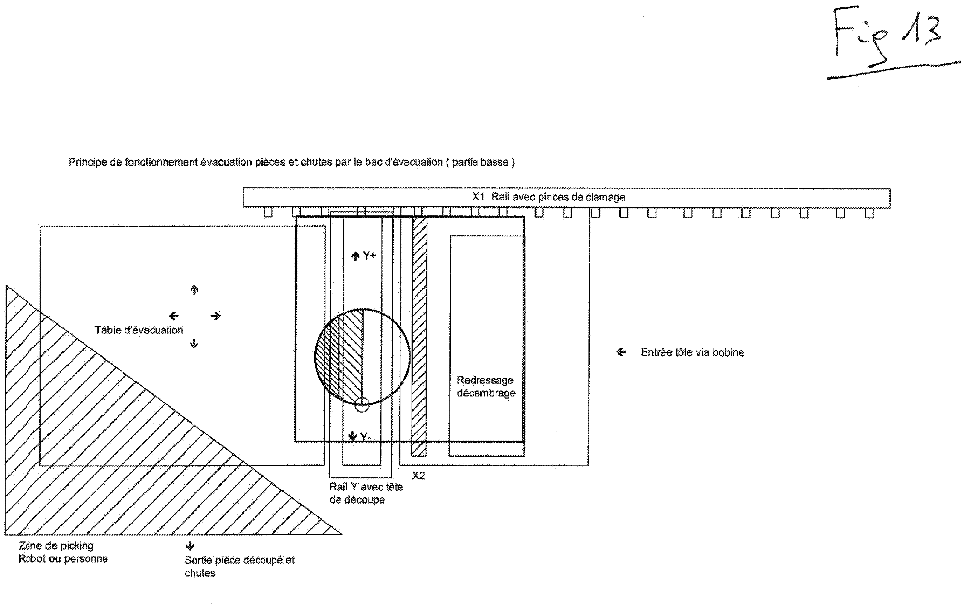

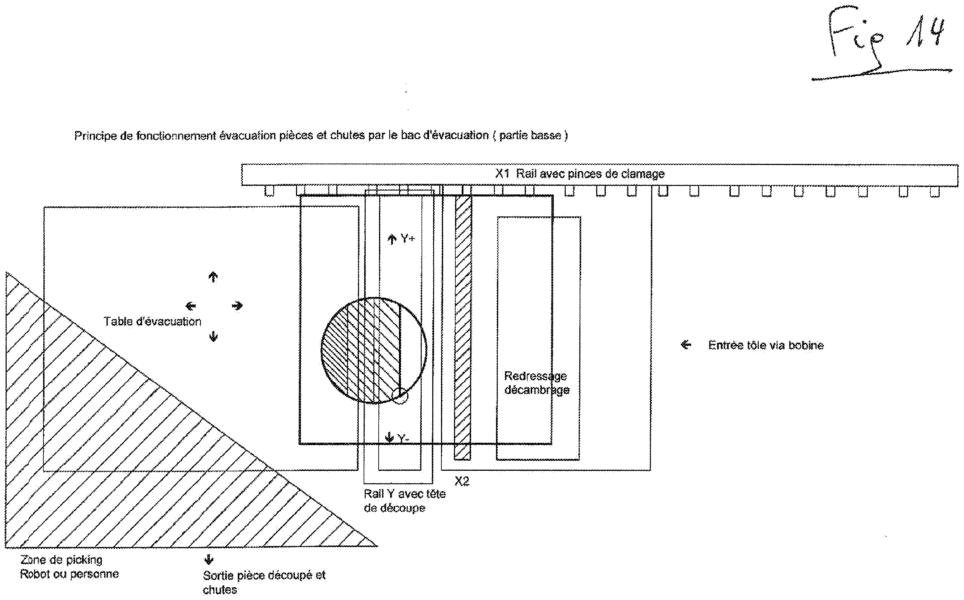

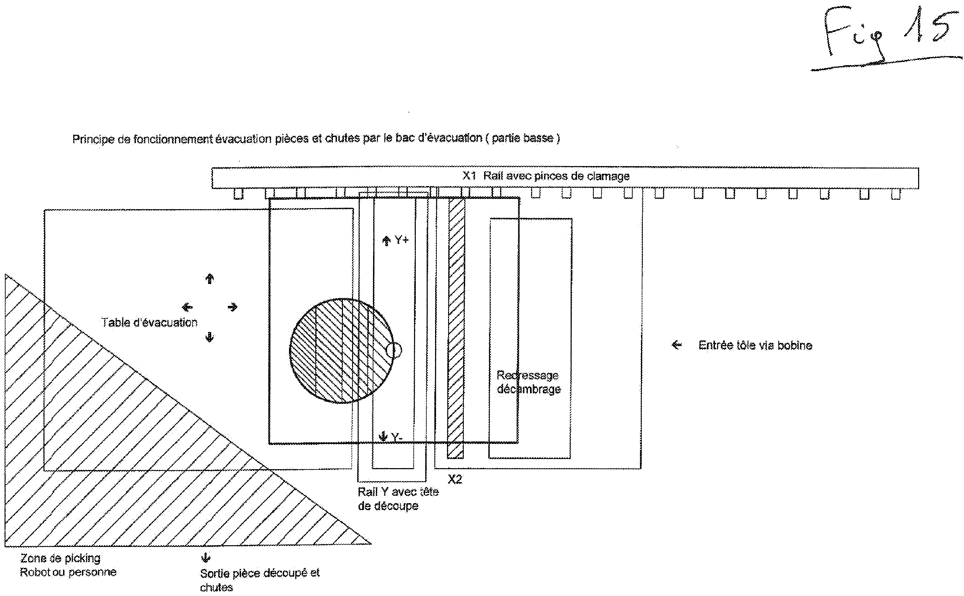

Les Fig. 12 à 15 illustrent la découpe d'une chute de matière à extraire du milieu du flanc, le flanc est localisé à droite de la tête de découpe, l'évacuation des chutes qui sont découpées en tranches successives qui tomberont vers le bas dans le bac de récupération / convoyeur motorisé. Progressivement l'axe X1 va se déplacer vers la gauche et l'axe Y va se déplacer également, la conjonction de ces deux axes va déterminer le parcours de découpe qui apparaît entre les Fig. 12 à 15, pour finalement arriver au dégagement dans le présent exemple à un rond (toute forme géométrique quelconque pouvant aussi être découpée).

En résumé, la présente machine de découpe laser permet de travailler à partir de bobines, le pincement adéquat du flanc à plat et l'évacuation adéquate des découpes et des chutes résultent en la solution la plus optimalisée qui puisse exister sur le marché pour :
- Economiser la matière,
- Faire un "nesting" extrêmement poussé entre les pièces car un squelette rigide n'est plus nécessaire,
- Supprimer la nécessité de garder un squelette une fois les pièces découpées,
- Et de là une élimination adéquate des chutes en petit éléments,
- Une récupération intelligente et en flux continu des éléments découpés = pas de temps morts,
- Une intégration possible d'un système automatique pour le chargement et déchargement de la matière / la machine peut dès lors travailler de manière autonome sur de longues périodes / ou bien une solution manuelle pour les opérations de chargement déchargement.

### Système de contrôle et software

La présente demande de brevet ne décrit pas l'automatisation et le système qui permet de déterminer la forme et dimensions des pièces à découper. Le système software utilisé plus généralement décrit comme un CAD/CAM dédié au secteur d'application (HVAC, Calorifugeage, etc.) associé à un applicatif de type "nesting" pour limiter les chutes de matière. Ces systèmes CAD/CAM & nesting sont utilisés dans tous les systèmes modernes de découpe que ce soit les portiques de découpe, les systèmes de découpe à partir de bobine. Ces systèmes CAD/CAM & nesting sont facilement adaptés par l'homme de métier pour correspondre à la fonctionnalité & géométrie de la machine.

### Stratégie de découpe

Une technique utilisée pour la découpe de tôlerie fine et matière peu résistante (aluminium par exemple de faible épaisseur 0,4 à 0,7 mm en calorifugeage) consiste à laisser des micro-attaches entre les différentes pièces, lorsque le processus de découpe sur une tôle de dimensions déterminées est terminé, le flanc est extrait de la machine et les pièces sont manuellement détachées, la micro-attache étant dès lors cassée par un mouvement répétitif de craquage ou bien par une paire de ciseaux. Les pièces de formes à récupérer et les chutes sont alors triées manuellement. Cette technique de travail peut parfois être privilégiée suivant le type d'utilisateur, par exemple les flancs peuvent être prédécoupés avec micro-attaches dans un atelier centralisé et ensuite être expédiés à plat vers un site décentralisé pour y être traités.

La présente machine de découpe laser peut évidemment accepter cette technique de travail qui est fondamentalement liée au parcours de découpe qui sera généré par le système CAD/CAM.

## Revendications

1. Machine de découpe laser comprenant
• un axe X1 muni de pinces permettant de maintenir fermement une matière à découper en feuilles ou en bobines (le flanc), permettant de déplacer la matière de la gauche vers la droite,
• un axe Y : perpendiculairement à l'axe X1, permettant le déplacement d'une tête de découpe laser,
et **caractérisé par** :
• un axe X2 muni d'au moins une paire de rouleaux pinceurs permettant de déplacer la matière à découper vers la gauche ou vers la droite,
• un système de redressage / décambrage / planage accolé à cet axe X2 comprenant un nombre de rouleaux,
• un bloc reprenant l'axe X2 et le système de redressage / décambrage / planage déplaçable vers le haut ou vers le bas, et
• une table d'évacuation motorisée permettant d'évacuer les éléments découpés (chutes et bonnes pièces) en un point précis.

2. Machine de découpe laser suivant la revendication 1, **caractérisée en ce que** le bloc reprenant X2 et le système de redressage / décambrage / planage est muni en sa partie supérieure d'une matière compatible limitant le frottement sur la matière à découper.

3. Machine de découpe laser suivant la revendication 2, **caractérisée en ce que** la matière compatible limitant le frottement sur la matière à découper (bloc) comprend des brosses.

4. Machine de découpe laser suivant l'une quelconque des revendications précédentes, **caractérisée en ce que** le bloc reprenant l'axe X2 et le système de redressage comprend une position de garage ou de repos, dans laquelle une face supérieure du bloc est alignée avec la ligne de passe de la machine.

5. Machine de découpe laser suivant l'une quelconque des revendications précédentes **caractérisée en ce que** le bloc reprenant l'axe X2 et le système de redressage / décambrage / planage comprend une position de travail (position haute) dans laquelle le bloc est positionné de telle façon que l'axe X2 est au même niveau que la ligne de passe.

6. Machine de découpe laser suivant l'une quelconque des revendications précédentes **caractérisée en ce qu'**elle comprend un bac de récupération ou un convoyeur motorisé, installé en dessous de la tête de découpe laser, évacuant les pièces hors de la machine

## Patentansprüche

1. Laserschneidemaschine, umfassend
• eine Achse X1, die mit Klemmen versehen ist, die gestatten, ein Material, das in Blätter oder in Rollen geschnitten werden soll (die Flanke) fest zu halten, und die gestattet, das Material von links nach rechts zu bewegen,
• eine Achse Y, senkrecht zu der Achse X1, die das Bewegen eines Laserschneidekopfs gestattet,
und **gekennzeichnet durch**:
• eine Achse X2, die mit wenigstens einem Klemmwalzenpaar versehen ist und das Bewegen des zu schneidenden Materials nach links oder nach rechts gestattet,
• ein System zum Geradebiegen/Entwölben/Glätten, das an diese Achse X2 angefügt ist und eine Anzahl von Walzen umfasst,
• einen Block, der die Achse X2 und das System zum Geradebiegen/Entwölben/Glätten aufnimmt und nach oben oder nach unten bewegbar ist, und
• einen motorbetriebenen Austragstisch, der das Austragen der geschnittenen Elemente (Ausschuss und Gutteile) in einem präzisen Punkt gestattet.

2. Laserschneidemaschine nach Anspruch 1, **dadurch gekennzeichnet, dass** der Block, der die Achse X2 und das System zum Geradebiegen/Entwölben/Glätten aufnimmt, in seinem oberen Teil mit einem kompatiblen Material versehen ist, das die Reibung auf dem zu schneidenden Material begrenzt.

3. Laserschneidemaschine nach Anspruch 2, **dadurch gekennzeichnet, dass** das kompatible Material, das die Reibung auf dem zu schneidenden Material (Block) begrenzt, Bürsten umfasst.

4. Laserschneidemaschine nach einem der vorhergehenden Ansprüche, **dadurch gekennzeichnet, dass** der Block, der die Achse X2 und das System zum Geradebiegen aufnimmt, eine Park- oder Ruhestellung umfasst, in der eine obere Fläche des Blocks mit der Passline der Maschine fluchtet.

5. Laserschneidemaschine nach einem der vorhergehenden Ansprüche, **dadurch gekennzeichnet, dass** der Block, der die Achse X2 und das System zum Geradebiegen/Entwölben/Glätten aufnimmt, eine Arbeitsstellung (obere Stellung) umfasst, in welcher der Block so positioniert ist, dass die Achse X2 auf derselben Höhe ist wie die Passline.

6. Laserschneidemaschine nach einem der vorhergehenden Ansprüche, **dadurch gekennzeichnet, dass** sie einen Auffangbehälter oder ein motorbetriebenes Förderband umfasst, der bzw. das unter dem Laserschneidekopf installiert ist und die Teile aus der Maschine austrägt.

## Claims

1. Laser cutting machine comprising
• an X1 axis provided with clamps which make it possible to firmly grip a material to be cut in sheets or on reels (the blank), enabling the material to be moved from left to right,
• a Y-axis perpendicular to the X1 axis, enabling the movement of a laser cutting head,
and **characterised by**
• an X2 axis with at least one pair of clamping rollers enabling the material to be cut to be moved to the left or to the right,
• a straightening/de-cambering/levelling system placed beside this X2 axis comprising a number of rollers,
• a unit incorporating the X2 axis and the straightening/de-cambering/levelling system which can be moved upwards or downwards, and
• a motorised discharge table enabling the cut elements to be discharged (scrap and good pieces) at a precise point.

2. Laser cutting machine according to claim 1, **characterised in that** the unit incorporating X2 and the straightening/de-cambering/levelling system is provided in its upper part with a compatible material which limits friction on the material to be cut.

3. Laser cutting machine according to claim 2, **characterised in that** the compatible material limiting friction on the material to be cut (unit) includes brushes.

4. Laser cutting machine according to any one of the preceding claims, **characterised in that** the unit incorporating the X2 axis and the straightening system includes a parking or at-rest position, in which an upper surface of the unit is aligned with the machine's pass line.

5. Laser cutting machine according to any one of the preceding claims, **characterised in that** the unit incorporating the X2 axis and the straightening/de-cambering/levelling system includes a working position (top position) in which the unit is positioned such that the X2 axis is at the same level as the pass line.

6. Laser cutting machine according to any one of the preceding claims, **characterised in that** it includes a recovery tray or a motorised conveyor, installed below the laser cutting head, which discharges pieces from the machine.
